# EUROPÄISCHE PATENTSCHRIFT

(11) **EP 0 625 102 B1**
(45) Veröffentlichungstag und Bekanntmachung des Hinweises auf die Patenterteilung: **18.10.1995**
(21) Anmeldenummer: 93903943.4
(22) Anmeldetag: 10.02.1993
(51) Int. Cl.: B60K 20/00, B66C 13/56

(54) **STEUERKNÜPPEL ZUM SCHALTEN BZW. BETÄTIGEN VON BAUELEMENTEN EINES NUTZKRAFTFAHRZEUGS**
STEERING STICK FOR SWITCHING OR ACTUATING COMPONENTS OF A UTILITY VEHICLE
LEVIER DE COMMANDE POUR COMMUTER OU ACTIONNER LES COMPOSANTS D'UN VEHICULE UTILITAIRE

(30) Priorität: 13.02.1992 DE 4204223
(43) Veröffentlichungstag der Anmeldung: 23.11.1994
(73) Patentinhaber: ZF FRIEDRICHSHAFEN Aktiengesellschaft, 88038 Friedrichshafen (DE)
(72) Erfinder: LAUER, Armin, D-7997 Immenstaad (DE); FREI, Walter, D-7990 Friedrichshafen 1 (DE); SCHOBINGER, Alfred, D-7990 Friedrichshafen 5 (DE)
(86) Internationale Anmeldenummer: EP9300320
(87) Internationale Veröffentlichungsnummer: WO9315927

(56) Entgegenhaltungen:
- DE-A- 2 060 433
- DE-A- 2 210 787
- DE-A- 3 905 769
- US-A- 2 348 107
- US-A- 3 941 009
- US-A- 4 726 442
- US-A- 5 042 314

## Beschreibung

Die Erfindung bezieht sich auf einen Steuerknüppel zum Schalten bzw. Betätigen von Bauelementen eines Nutzkraftfahrzeuges, wie Radlader oder dergleichen, mit einem einer Hand ergonomisch angepaßten Griff, an den sich ein Kopf mit Schaltelementen anschließt, die derart angeordnet sind, daß sie in Reichweite des Daumens der den Griff umfassenden Hand liegen. Derartige Steuerknüppel sind wohlbekannt.

Bei den bekannten Arbeitsmaschinen, wie z. B. Radladern, landwirtschaftlichen Schleppern, Mähdreschern oder dergleichen, wird weitgehend auf eine ergonomisch günstige Gestaltung und Anordnung der Bedienelemente großer Wert gelegt. Es ist dennoch die Regel, daß Bedienelemente an derartigen Arbeitsmaschinen mehrere Hebel aufweisen, denen recht unterschiedliche Funktionen zugeordnet sind. Bei einem Radlader wird beispielsweise über einen Hebel die Fahrtrichtung Vorwärts/Rückwärts angewählt. Die einzelnen Gangstufen werden über einen weiteren Hebel geschaltet. Für die Betätigung der Arbeitshydraulik, z. B. zum Anheben und Verschwenken der Schaufel, sind zusätzliche Hebel erforderlich.

Bei der Vielzahl der vorhandenen Hebel wird dem Fahrer ein hohes Maß an Konzentration abverlangt. Hinzu kommt, daß derartige Nutzfahrzeuge oft unter widrigen Einsatzbedingungen arbeiten müssen. Es überrascht daher nicht, daß der Fahrer unter diesen Anstrengungen zu schneller Ermüdung neigt. Ebenso ist die Gefahr von Fehlbedienungen gegeben.

Aus der US-A 5 042 314 ist ein Steuerknüppel der eingangs genannten Art bekanntgeworden. Dieser Steuerknüppel weist ein erstes Betätigungselement zum Lenken des Fahrzeugs auf. Zweite Betätigungsmittel sind vorgesehen, um das Getriebe zu schalten. Diese zweiten Betätigungsmittel bestehen aus einem Schalter, der im Kopf des Steuerknüppels schwenkbar angeordnet ist. Ferner sind dritte Betätigungsmittel - auf der Vorderseite - vorgesehen. Diese Betätigungsmittel bestehen aus einem elektrischen Schalter mit drei Schaltstellungen. Da der im Kopf angeordnete Schalter (zweite Betätigungsmittel) lediglich zum Schalten des Getriebes Verwendung findet und hierzu zudem, bedingt durch die räumliche Anordnung und die Art der Betätigung, relativ viel Platz beansprucht wird, sind zusätzliche Funktionen, insbesondere unter ergonomischen Gesichtspunkten, schwerlich unterzubringen.

Die der Erfindung zugrunde liegende Aufgabe besteht darin, einen Steuerknüppel zum Schalten bzw. Betätigen von Bauelementen, insbesondere für Nutzkraftfahrzeuge (Bau- und Arbeitsmaschinen), zu schaffen, der eine sichere und ermüdungsarme Schalt- bzw. Betätigungsarbeit gewährleistet.

Die gestellte Aufgabe wird dadurch gelöst,
daß die räumliche Lage einer Reihe erster Schaltelemente zum Griff so gewählt ist, daß sie etwa auf einem Kreisbogen liegen, dessen Radius etwa dem Daumenradius der den Griff umfassenden Hand entspricht,
daß eine Reihe zusätzlicher Schaltelemente auf einem weiteren Kreisbogen oberhalb der Reihe der ersten Schaltelemente angeordnet ist,
daß die Schaltelemente aus Tasten bestehen für: Fahrtrichtung Vorwärts, Fahrtrichtung Rückwärts, Herunterschalten um eine Gangstufe und Überführen eines Arbeitsgerätes in eine vorbestimmte Stellung und
daß die zusätzlichen Schaltelemente aus einer Taste zur Schaltung der Neutralstellung eines Getriebes sowie zwei Tasten zur Wahl der Gangstufe durch Hoch- bzw. Herunterschalten des Getriebes bestehen.
Gegenüber dem bekannten Stand der Technik unterscheidet sich der erfindungsgemäße Steuerknüppel durch die Art und Anordnung der Schaltelemente im Kopf des Steuerknüppels. Die Schaltelemente liegen in zwei Reihen auf zwei Kreisbogen. Der Radius des ersten Kreisbogens entspricht etwa dem Daumenradius der den Griff umfassenden Hand, während die zusätzlichen Schaltelemente auf einem Kreisbogen mit einem geringfügig größeren Radius angeordnet sind. Hierbei ist eine Unterscheidung hinsichtlich der Funktionen und deren Bedienhäufigkeit getroffen. Die Funktionen, die häufig geschaltet werden, sind den Schaltelementen zugeordnet, die auf dem ersten Kreisbogen liegen. Funktionen, die weniger häufig verändert werden, liegen hingegen auf den Schaltelementen oberhalb der Reihe der ersten Schaltelemente. Mit der vorgeschlagenen Lösung lassen sich sämtliche Schaltfunktionen oder auch visuelle Anzeigen zentral im Kopf des Steuerknüppels zusammenfassen. Diese Anordnung, auf der der Bedienungsperson zugewandten Seite des Steuerknüppels, gewährleistet einen guten Überblick. Zur Betätigung der Schaltelemente braucht der Fahrer die Hand nicht vom Griff des Steuerknüppels zu nehmen. Dies erhöht die Betriebssicherheit. Da sämtliche Funktionen über den Daumen - ohne Verlagerung der Hand - zu schalten sind, ist die Handhabung für den Fahrer vereinfacht und demzufolge auch kaum anstrengend. Durch eine "selbsterklärende" Anordnung, die Plausibilitätsgesichtspunkten folgt, ist die Gefahr einer Fehlbedienung praktisch ausgeschlossen.
Während die ersten Schaltelemente unmittelbar durch eine Verschwenkbewegung des Daumens anzuwählen sind, ist für die Betätigung der zusätzlichen Schaltelemente eine geringfügige Verlagerung des Daumens nach oben erforderlich. Diese zusätzliche Bewegung wird von der Bedienungsperson kaum als störend empfunden, zumal die Schalthäufigkeit für diese Elemente vergleichsweise niedrig ist. Bei einem dieser zusätzlichen Schaltelemente kann es sich beispielsweise um eine Taste handeln, die bei Betätigung das Getriebe in die Stellung Neutral schaltet. Zwei weitere Tasten können vorgesehen sein, um das Getriebe jeweils um eine Gangstufe noch oben bzw. unten durchzuschalten. Auch diese Maßnahmen erhöhen die Betriebssicherheit.

In der Reihe der ersten Schaltelemente sind vorzugsweise die Schaltelemente angeordnet, die häufig betätigt werden.
Hier kann es sich beispielsweise um Tasten handeln, mit denen die Fahrtrichtung Vorwärts bzw. Rückwärts geschaltet wird.
Zweckmäßig ist ferner eine Taste, mit der um eine Gangstufe heruntergeschaltet wird (Kick-down). Schließlich ist unter Sicherheitsaspekten eine Taste wertvoll, die bei Betätigung ein Überführen des Arbeitsgeräts, z. B. einer Schaufel, in eine Mittelstellung herbeiführt.

Zur Erläuterung der den Schaltelementen zugeordneten Funktionen hat es sich als zweckmäßig erwiesen, den Tasten Symbole zuzuordnen, die auf einem auswechselbaren Träger angebracht sind. Beim Träger kann es sich beispielsweise um eine selbstklebende Folie oder einklippsbare Platte handeln, die sich farblich vom übrigen Teil des Steuerknüppels abhebt. Hierdurch wird die Übersichtlichkeit erhöht. Wenn die Tasten mit einer anderen Funktion belegt werden, kann der Träger leicht entfernt und gegen einen anderen Träger mit den nunmehr geltenden Symbolen ausgetauscht werden.

Um die den Schaltelementen zugeordneten Funktionen zu verändern, ist der Steuerknüppel mit einer Steuerelektronik verbunden, die frei programmierbar ist.

Eine zusätzliche Sicherung gegen Fehlbedienung ist auf besonders einfache Weise dadurch erzielbar, daß zwischen zwei benachbarten Schaltelementen eine fühlbare Begrenzung angeordnet ist. Bei dieser fühlbaren Begrenzung kann es sich beispielsweise um einen Steg bzw. eine Rippe handeln, die sich von der Oberfläche des Trägers deutlich abhebt. Wenn die Bedienungsperson den Daumen von einem Schaltelement zum anderen Schaltelement wechselt, wird dieser Wechsel durch diese fühlbare Begrenzung zusätzlich signalisiert. Diese Maßnahme erhöht die taktile Sicherheit des Steuerknüppels.

Wenn der Steuerknüppel durch Drücken und Ziehen verschwenkbar gelagert ist, lassen sich zusätzliche Funktionen schalten. Über diese Verschwenkbewegung kann beispielsweise die Hydraulik zur Betätigung der Schaufelarme ausgelöst werden. Die Schaufel wird nach vorne gekippt, wenn der Steuerknüppel gedrückt wird und umgekehrt. Der Steuerknüppel ist so ausgelegt, daß er auf eine weitere Steuereinheit, z. B. Hydraulik, ankoppelbar ist.

Unter ergonomischen Gesichtspunkten hat sich eine Neigung des Steuerknüppels - gesehen in Seitenansicht - in einem Bereich von ca. 15 Grad bis 30 Grad gegenüber der Vertikalen nach vorne als besonders günstig erwiesen. Auch diese Maßnahme trägt dazu bei, daß die Hand der Bedienungsperson ermüdungsfrei den Steuerknüppel über einen längeren Zeitraum umfassen kann.

Aus Sicherheitsgründen kann sich eine kombinierte Betätigung von Schaltelementen (Tasten) als sehr zweckmäßig erweisen. In diesem Zusammenhang ist es besonders vorteilhaft, wenn im Kopf des Steuerknüppels auf der den Schaltelementen abgewandten Rückseite mindestens eine Taste angeordnet ist. Diese Taste wird mit dem Zeigefinger der Hand betätigt. Die kombinierte Betätigung mit dem Daumen und dem Zeigefinger der Hand macht besonders deutlich, daß eine Sonderfunktion, beispielsweise aus Sicherheitsgründen, z. B. Anfahren aus dem Stillstand, geschaltet wird.

Es ist ferner vorteilhaft, wenn im Kopf des Steuerknüppels zumindest zwei Signalelemente angeordnet sind, die die gewählte Fahrtrichtung visuell anzeigen. Bei diesen Signalelementen kann es sich beispielsweise um farbig unterschiedliche Leuchtdioden handeln. Denkbar sind auch hintergrundbeleuchtete Felder, die beispielsweise aus farbig unterschiedlichen Reflektoren gebildet werden.

Es ist selbstverständlich möglich und im Rahmen der Erfindung liegend, wenn eines oder mehrere der Schaltelemente durch Signalelemente ausgetauscht werden. Es ist daher ohne weiteres möglich, eine Taste beispielsweise gegen eine Leuchtdiode auszutauschen. Ferner kann die Taste selbst als Leuchttaste ausgebildet sein. Selbstverständlich ist auch eine beliebige Kombination von Leuchtdioden, Leuchttasten oder separaten Signalfeldern möglich.

Weitere für die Erfindung wesentliche Merkmale sowie die hieraus resultierenden Vorteile sind der nachfolgenden Erläuterung eines Ausführungsbeispiels der Erfindung anhand der Zeichnungen zu entnehmen.
Es zeigen:
- Fig. 1: einen Steuerknüppel zum Schalten bzw. Betätigen von Bauelementen eines Nutzkraftfahrzeugs in vereinfachter Darstellung;
- Fig. 2: den Steuerknüppel nach Fig. 1, gesehen in Seitenansicht.

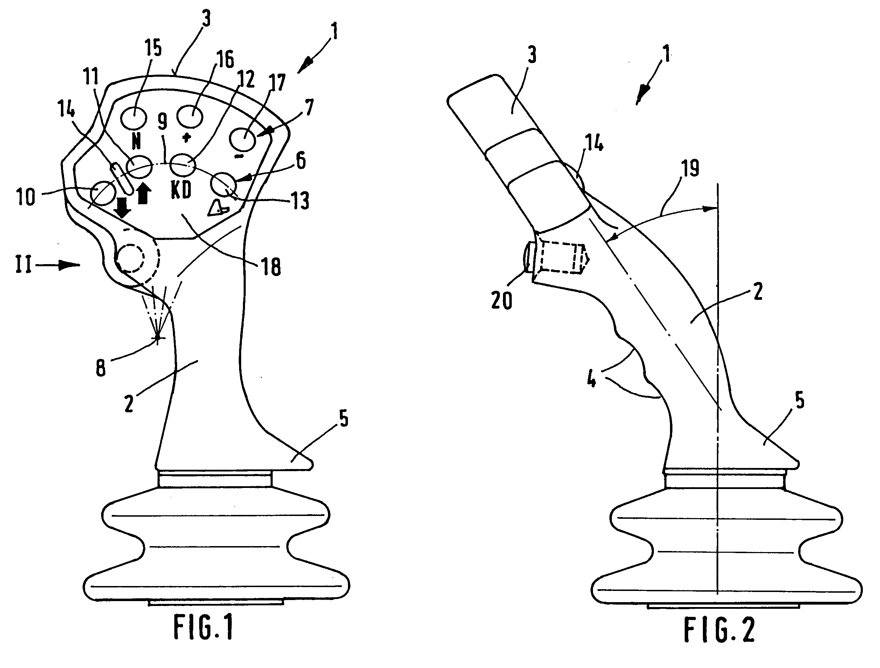

In Fig. 1 ist ein Steuerknüppel 1 in Vorderansicht so detailliert abgebildet, wie es für das Verständnis der vorliegenden Erfindung erforderlich ist. Der Steuerknüppel 1 ist für den Einsatz an einem Nutzkraftfahrzeug, wie beispielsweise einem Radlader, bestimmt. Die übrigen Teile dieses Nutzkraftfahrzeugs sind selbst nicht abgebildet. Im vorliegenden Fall bedeutet Vorderansicht die Blickrichtung in Vorwärtsfahrtrichtung. Der Steuerknüppel dient zum Schalten bzw. Betätigen von Bauelementen des Radladers. Geschaltet wird beispielsweise das Getriebe. Bei dem betätigten Bauelement handelt es sich im vorliegenden Fall um ein Arbeitsgerät in Form einer Schaufel, die an der Frontseite des Radladers angeordnet und hydraulisch betätigbar ist.

Die charakteristischen Hauptbestandteile des Steuerknüppels 1 bestehen aus einem Griff 2 und einem oberhalb angeordneten Kopf 3. Der Griff 2 ist einer selbst nicht abgebildeten Hand ergonomisch angepaßt. Hierzu ist er auf seiner Rückseite (vergleiche Fig. 2) mit Griffmulden 4 versehen. Der Griff 2 geht in seinem unteren Bereich in eine etwa kragenförmige Aufnahme 5 für den Handballen über.

Im Kopf 3 ist eine Reihe erster Schaltelemente 6 und eine Reihe zusätzlicher Schaltelemente 7 angeordnet. Beiden Reihen der Schaltelemente 6 und 7 ist zunächst gemeinsam, daß sie im Kopf 3 derart angeordnet sind, daß sie in Reichweite des Daumens der den Griff 2 umfassenden Hand liegen. Die Lage des Daumengelenks ist mit der Bezugsziffer 8 kenntlich gemacht.

Neben dem Umstand, daß sämtliche Schaltelemente 6 und 7 in Reichweite des Daumens liegen, ist die räumliche Anordnung der unteren Schaltelemente 6 so gewählt, daß sie etwa auf einem Kreisbogen 9 liegen, dessen Radius etwa dem Daumenradius der den Griff umfassenden Hand entspricht. Die Schaltelemente 6 bestehen aus einer Taste 10 für Fahrtrichtung Vorwärts, einer rechts danebenliegenden Taste 11 für Fahrtrichtung Rückwärts, einer Taste 12, mit der das Herunterschalten des Getriebes um eine Gangstufe (Kick-down) besorgt wird und einer weiteren Taste 13 zum Überführen eines Arbeitsgeräts (Schaufel) in eine Mittelstellung.

Zwischen den Tasten 10 und 11 für die Fahrtrichtung Vorwärts bzw. Rückwärts ist eine fühlbare Begrenzung 14 vorhanden.

Bei den Tasten 10 bis 13 kann es sich, je nach den Erfordernissen, um Öffner oder Schließer oder Wechsel-Taster handeln.

Die zusätzlichen Schaltelemente 7 liegen auf einem weiteren Kreisbogen oberhalb der Schaltelemente 6. Bei diesen Schaltelementen handelt es sich um eine Taste 15 zur Schaltung der Neutralstellung des Getriebes sowie zweier Tasten 16 und 17 zur Wahl der Gangstufe durch Hoch- bzw. Herunterschalten des Getriebes.

Den Tasten 10 bis 13 und 15 bis 17 sind zweckmäßigerweise Symbole (Pfeile für Fahrtrichtung Vorwärts bzw. Rückwärts, Schaufel für Arbeitsgerät, Plus bzw. Minus für eine Gangstufe höher bzw. niedriger, N für Neutralstellung und KD für Kick-down) zugeordet. Diese Symbole sind auf einem auswechselbaren Träger 18 angeordnet.
Bei dem Träger 18 kann es sich um eine selbstklebende Folie oder eine einklippsbare Platte handeln, die sich farblich von den übrigen Bestandteilen des Steuerknüppels unterscheidet und auf die die Symbole aufgedruckt sind. Da den Tasten durch eine selbst nicht abgebildete, frei programmierbare Steuerelektronik bedarfsweise andere Funktionen zugeordnet werden können, erweist sich die austauschbare Folie oder Platte als besonders praktisch. Im Falle einer Umbelegung der Tastenfunktionen kann die Folie/Platte einfach entfernt und gegen eine neue ausgetauscht werden.

Aus der Seitenansicht entsprechend Fig. 2 ist ersichtlich, daß der Steuerknüppel um einen Winkel 19 in einem Bereich von ca. 15 Grad bis 30 Grad gegenüber der Vertikalen nach vorne (in Fahrtrichtung) geneigt ist. Diese Neigung ist aus ergonomischen Gründen vorteilhaft. Aus der Seitenansicht ist ersichtlich, daß auf der den Schaltelementen 6 und 7 abgewandten Rückseite des Steuerknüppels mindestens eine weitere Taste 20 angeordnet ist, die mit dem Zeigefinger der Hand betätigt wird. Die Taste 20 ermöglicht eine kombinierte Betätigung von Tasten, wie sie, insbesondere aus Sicherheitsgründen, erforderlich sein kann.

Wenn der Steuerknüppel durch Drücken und Ziehen verschwenkbar gelagert ist, lassen sich zusätzliche Funktionen schalten. Über diese Verschwenkbewegung kann beispielsweise die Hydraulik zur Betätigung der Schaufelarme ausgelöst werden. Die Schaufel wird nach vorne gekippt, wenn der Steuerknüppel gedrückt wird und umgekehrt.

Aus Fig. 1 ist ferner sichtlich, daß der Steuerknüppel in Vorderansicht etwa die Form einer Tatze aufweist. Im Kopf des Steuerknüppels läßt sich eine relativ hohe Anzahl von Schaltelememten so unterbringen, daß sie sämtlich in Reichweite des Daumens der den Griff umfassenden Hand liegen. Die Schaltelemente 6 und 7 können durch visuelle Anzeigen ersetzt oder auch ergänzt werden. Beispielsweise kann anstelle einer Taste ein Beleuchtungskörper, z. B. eine Leuchtdiode, Verwendung finden, die einen bestimmten Betriebszustand signalisiert. Selbstverständlich ist hier jede sinnvolle Kombination möglich. So können beispielsweise Leuchtfelder oder hintergrundbeleuchtete Leuchttasten für eine zusätzliche visuelle Anzeige sorgen.

### Bezugszeichen

- 1: Steuerknüppel
- 2: Griff
- 3: Kopf
- 4: Griffmulden
- 5: Auflage
- 6: Schaltelement
- 7: Schaltelement
- 8: Lage des Daumengelenks
- 9: Kreisbogen
- 10: Taste
- 11: Taste
- 12: Taste
- 13: Taste
- 14: Begrenzung
- 15: Taste
- 16: Taste
- 17: Taste
- 18: Träger
- 19: Winkel
- 20: Taste

## Patentansprüche

1. Steuerknüppel (1) zum Schalten bzw. Betätigen von Bauelementen eines Nutzkraftfahrzeugs, wie Radlader oder dergleichen, mit einem einer Hand ergonomisch angepaßten Griff (2), an den sich ein Kopf (3) mit Schaltelementen (6, 7) anschließt, die derart angeordnet sind, daß sie in Reichweite des Daumens der den Griff (2) umfassenden Hand liegen, dadurch **gekennzeichnet,**
daß die räumliche Lage einer Reihe erster Schaltelemente (6) zum Griff (2) so gewählt ist, daß sie etwa auf einem Kreisbogen (9) liegen, dessen Radius etwa dem Daumenradius der den Griff (2) umfassenden Hand entspricht,
daß eine Reihe zusätzlicher Schaltelemente (7) auf einem weiteren Kreisbogen oberhalb der Reihe der ersten Schaltelemente (6) angeordnet ist,
daß die Schaltelemente (6) aus Tasten (10, 11, 12, 13) bestehen für: Fahrtrichtung Vorwärts, Fahrtichtung Rückwärts, Herunterschalten um eine Gangstufe und Überführen eines Arbeitsgeräts in eine vorbestimmte Stellung und daß die zusätzlichen Schaltelemente (7) aus einer Taste (15) zur Schaltung der Neutralstellung eines Getriebes sowie zwei Tasten (16, 17) zur Wahl der Gangstufe durch Hoch- bzw. Herunterschalten des Getriebes bestehen.

2. Steuerknüppel nach Anspruch 1, dadurch **gekennzeichnet,** daß den Tasten (10 bis 13 und 15 bis 17) Symbole zugeordnet sind, die auf einem auswechselbaren Träger (18), z. B. einer selbstklebenden Folie, angebracht sind.

3. Steuerknüppel nach Anspruch 1, dadurch **gekennzeichnet,** daß die Funktionen, mit denen die Schaltelemente (6, 7) belegt sind, durch eine variabel programmierbare Sternerelektronik veränderlich sind.

4. Steuerknüppel nach Anspruch 1, dadurch **gekennzeichnet,** daß zwischen zwei benachbarten Schaltelementen (10, 11) eine fühlbare Begrenzung (14) als Sicherung gegen Fehlbedienung angeordnet ist.

5. Steuerknüppel nach Anspruch 1, dadurch **gekennzeichnet,** daß der Steuerknüppel (1) durch Drücken und Ziehen verschwenkbar ist.

6. Steuerknüppel nach Anspruch 1, dadurch **gekennzeichnet,** daß der Steuerknüppel (1) - gesehen in Seitenansicht - um ca. 15 Grad bis 30 Grad gegenüber der Vertikalen nach vorne geneigt ist.

7. Steuerknüppel nach Anspruch 1, dadurch **gekennzeichnet,** daß auf der den Schaltelementen (6, 7) abgewandten Rückseite des Steuerknüppels (1) mindestens eine Taste (20) angeordnet ist, die mit dem Zeigefinger der Hand betätigt wird.

8. Steuerknüppel nach Anspruch 1, dadurch **gekennzeichnet,** daß im Kopf (3) des Steuerknüppels (1) Signalelemente angeordnet sind, die z. B. die gewählte Fahrtrichtung visuell anzeigen.

9. Steuerknüppel nach Anspruch 1, dadurch **gekennzeichnet,** daß der Griff (2) in seinem unteren Bereich in eine etwa kragenförmige Auflage (5) für den Handballen übergeht.

## Claims

1. Control lever (1) for switching or actuating components of a commercial motor vehicle such as a wheeled loader or such like, with a grip (2) which is ergonomically adapted to the hand and adjoins a head (3) with switching elements (6, 7) arranged in such a manner that they lie within reach of the thumb of the hand encompassing the grip (2), characterised in that:
the spatial location of a series of first switching elements (6) in relation to the grip (2) is chosen in such a way that they are located approximately on a circular arc (9), the radius of which corresponds approximately to the radius of the thumb of the hand encompassing the grip (2),
a series of additional switching elements (7) is arranged on another circular arc above the series of first switching elements (6),
the switching elements (6) consist of buttons (10, 11, 12, 13) for: travelling forwards, travelling backwards, shifting down by one gear and transporting a working implement to a predetermined position and
the additional switching elements (7) consist of a button (15) for selecting the neutral position of a gear mechanism and two buttons (16, 17) for selecting the gear by shifting the gear mechanism up or down.

2. Control lever according to Claim 1, characterised in that symbols are assigned to the buttons (10 to 13 and 15 to 17), said symbols being disposed on a replaceable carrier (18), for example a self-adhesive foil.

3. Control lever according to Claim 1, characterised in that the functions performed by the switching elements (6, 7) are capable of being changed by means of a variably programmable electronic control system.

4. Control lever according to Claim 1, characterised in that a perceptible boundary (14) is arranged between two adjacent switching elements (10, 11) by way of safety device for preventing incorrect operation.

5. Control lever according to Claim 1, characterised in that the gearstick (1) is capable of being tilted by pushing and pulling.

6. Control lever according to Claim 1, characterised in that the gearstick (1) - viewed from the side - is inclined forwards by about 15 degrees to 30 degrees in relation to the vertical.

7. Control lever according to Claim 1, characterised in that on the rear side of the gearstick (1) facing away from the switching elements (6, 7) at least one button (20) is arranged which is actuated with the index finger of the hand.

8. Control lever according to Claim 1, characterised in that within the head (3) of the gearstick (1) there are arranged signalling elements which, for example, indicate visually the chosen direction of travel.

9. Control lever according to Claim 1, characterised in that the grip (2) in its lower region merges into an approximately collar-shaped support (5) for the ball of the thumb.

## Revendications

1. Levier de commande (1) pour commuter ou actionner des composants d'un véhicule utilitaire, tel qu'une chargeuse sur roues ou analogue, comportant une poignée (2) adaptée ergonomiquement à une main et raccordée à une tête (3) pourvue d'éléments de commutation (6, 7) dont la disposition est telle qu'ils sont à portée du pouce de la main tenant la poignée (2), **caractérisé**
en ce que la situation dans l'espace d'une rangée de premiers éléments de commutation (6) par rapport à la poignée (2) est choisie de façon que ces éléments se trouvent sensiblement sur un arc de cercle (9) dont le rayon correspond approximativement au rayon du pouce de la main tenant la poignée (2),
en ce qu'une rangée d'éléments de commutation additionnels (7) est disposée sur un autre arc de cercle au-dessus de la rangée des premiers éléments de commutation (6),
en ce que les éléments de commutation (6) comprennent des touches (10, 11, 12, 13) pour : marche avant, marche arrière, rétrograder d'un rapport, et mettre un appareil de travail dans une position prédéterminée, et
en ce que les éléments de commutation additionnels (7) comprennent une touche (15) pour mettre une boîte de vitesses en position neutre, ainsi que deux touches (16, 17) pour sélectionner un rapport par commutation respectivement vers le haut et vers le bas dans la boîte de vitesses.

2. Levier de commande selon la revendication 1, **caractérisé** en ce que les touches (10 à 13 et 15 à 17) sont associées à des symboles apposés sur un support échangeable (18), notamment une feuille autocollante.

3. Levier de commande selon la revendication 1, **caractérisé** en ce que les fonctions associées aux éléments de commutation (6, 7) sont modifiables au moyen d'une électronique de commande programmable de manière variable.

4. Levier de commande selon la revendication 1, **caractérisé** en ce qu'une démarcation tactile (14) est disposée entre deux éléments de commutation adjacents (10, 11) en guise de sécurité contre de fausses manoeuvres.

5. Levier de commande selon la revendication 1, **caractérisé** en ce qu'il est inclinable par poussée et traction.

6. Levier de commande selon la revendication 1, **caractérisé** en ce que - en vue latérale - le levier de commande (1) est incliné en avant d'environ 15° à 30° par rapport à la verticale.

7. Levier de commande selon la revendication 1, **caractérisé** en ce qu'au dos du levier de commande (1), à savoir du côté opposé aux éléments de commutation (6, 7), il est prévu une touche (20) qui est actionnée par l'index de la main.

8. Levier de commande selon la revendication 1, **caractérisé** en ce que des éléments de signalisation, indiquant visuellement par exemple le sens de marche sélectionné, sont disposés dans la tête (3) du levier de commande (1).

9. Levier de commande selon la revendication 1, **caractérisé** en ce que la partie inférieure de la poignée (2) se raccorde à une zone d'appui en forme de collerette (5) pour appuyer la paume de la main.
